(19) Europäisches Patentamt
European Patent Office
Office européen des brevets

(11) **EP 2 535 856 A1**

(12) **EUROPEAN PATENT APPLICATION**

(43) Date of publication:
**19.12.2012 Bulletin 2012/51**

(51) Int Cl.:
**G06Q 10/10** (2012.01)

(21) Application number: **12004496.1**

(22) Date of filing: **14.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.06.2011 US 201113163577**

(71) Applicant: **SAP AG**
**69190 Walldorf (DE)**

(72) Inventors:
• **Allgaier, Matthias**
**69190 Walldorf**
**(DE)**
• **Heller, Markus**
**69190 Walldorf**
**(DE)**

(74) Representative: **Müller-Boré & Partner**
**Patentanwälte**
**Grafinger Straße 2**
**81671 München (DE)**

(54) **Cased-based retrieval of integration cases using similarity measures based on a business domain ontology**

(57)     In one embodiment, a method includes storing a set of integration cases previously used for adapting a standard enterprise system. The set of integration cases include a business function attribute selected from a business domain ontology (BDO) of an enterprise. The integration problem includes a business function attribute selected from the BDO of the enterprise. A similarity is determined between the business function attribute of each of the set of integration cases to the business function attribute of the integration problem. The similarity is determined based on a first position in the BDO of each business function attribute of the set of integration cases in relation to a second position in the BDO of the business function attribute of the integration problem. One or more similar integration cases in the set of integration cases is determined to the integration problem based on the determined similarity and output.

Fig. 1

**Description**

BACKGROUND

Particular embodiments generally relate to enterprise systems.

The extension of standard enterprise systems with additional services provided by third party vendors requires deep business domain as well as technical expert knowledge due to the wide and complex spectrum of supported processes and customizing options. In most cases, extension or adaptation of the core enterprise system itself is required (e.g. by adding new user interface (UI) elements to core UI components, adding new process steps to core process models or even extending business objects with additional fields).

The integration of services is carried out in time- and cost intensive projects. However, valuable extension and integration experience from similar problems already solved in the past is not systematically leveraged that again leads to high integration costs.

SUMMARY

In one embodiment, a method includes storing a set of integration cases previously used for adapting a standard enterprise system. The set of integration cases include a business function attribute selected from a business domain ontology (BDO) of an enterprise. An integration problem is received for extending the standard enterprise system. The integration problem includes a business function attribute selected from the BDO of the enterprise. A similarity is determined between the business function attribute of each of the set of integration cases to the business function attribute of the integration problem. The similarity is determined based on a first position in the BDO of each business function attribute of the set of integration cases in relation to a second position in the BDO of the business function attribute of the integration problem. One or more similar integration cases in the set of integration cases is determined to the integration problem based on the determined similarity. The method then outputs the one or more similar integrations cases.

In one embodiment, the BDO provides a categorization of business functions in the enterprise.

In one embodiment, the BDO is organized in a hierarchical structure.

In one embodiment, the method computes a local similarity measure for the business function attribute of each of the set of integration cases to the business function attribute of the integration problem; computes a local similarity measure for another attribute of each of the set of integration cases to another attribute of the integration problem; and computes a global similarity for each of the set of integration cases based on each integration cases computed local similarity measures.

In one embodiment, a non-transitory computer-readable storage medium contains instructions for controlling a computer system to be operable to: store a set of integration cases previously used for adapting a standard enterprise system, wherein the set of integration cases include a business function attribute selected from a business domain ontology (BDO) of an enterprise; receive an integration problem for extending the standard enterprise system, the integration problem including a business function attribute selected from the BDO of the enterprise; determine a similarity between the business function attribute of each of the set of integration cases to the business function attribute of the integration problem, the similarity determined based on a first position in the BDO of each business function attribute of the set of integration cases in relation to a second position in the BDO of the business function attribute of the integration problem; determine one or more similar integration cases in the set of integration cases to the integration problem based on the determined similarity; and output the one or more similar integrations cases.

In one embodiment, an apparatus includes one or more computer processors and a computer-readable storage medium including instructions for controlling the one or more computer processors to be operable to: store a set of integration cases previously used for adapting a standard enterprise system, wherein the set of integration cases include a business function attribute selected from a business domain ontology (BDO) of an enterprise; receive an integration problem for extending the standard enterprise system, the integration problem including a business function attribute selected from the BDO of the enterprise; determine a similarity between the business function attribute of each of the set of integration cases to the business function attribute of the integration problem, the similarity determined based on a first position in the BDO of each business function attribute of the set of integration cases in relation to a second position in the BDO of the business function attribute of the integration problem; determine one or more similar integration cases in the set of integration cases to the integration problem based on the determined similarity; and output the one or more similar integrations cases.

The following detailed description and accompanying drawings provide a better understanding of the nature and advantages of the present invention.

BRIEF DESCRIPTION OF THE DRAWINGS

Fig. 1 depicts a system for providing definition and retrieval of integration cases according to one embodiment.

Fig. 2 depicts a case-based reasoning cycle for the semantic re-use of integration knowledge in the context of extensible standard enterprise systems according to one embodiment.

Fig. 3 shows a similarity assessment according to one embodiment.

Fig. 4 depicts an example of a business domain ontology according to one embodiment.

Fig. 5 shows an example of an interface of a business application according to one embodiment.

Fig. 6 shows an example of an interface in which a business function may be selected according to one embodiment.

Fig. 7 depicts a simplified flowchart of a method for retrieving integration cases 304 according to one embodiment.

Fig. 8 illustrates hardware of a special purpose computing machine configured with a similarity measure using a BDO according to one embodiment.

DETAILED DESCRIPTION

Described herein are techniques for using a similarity measure based on a business domain ontology. In the following description, for purposes of explanation, numerous examples and specific details are set forth in order to provide a thorough understanding of embodiments of the present invention. Particular embodiments as defined by the claims may include some or all of the features in these examples alone or in combination with other features described below, and may further include modifications and equivalents of the features and concepts described herein.

System Overview

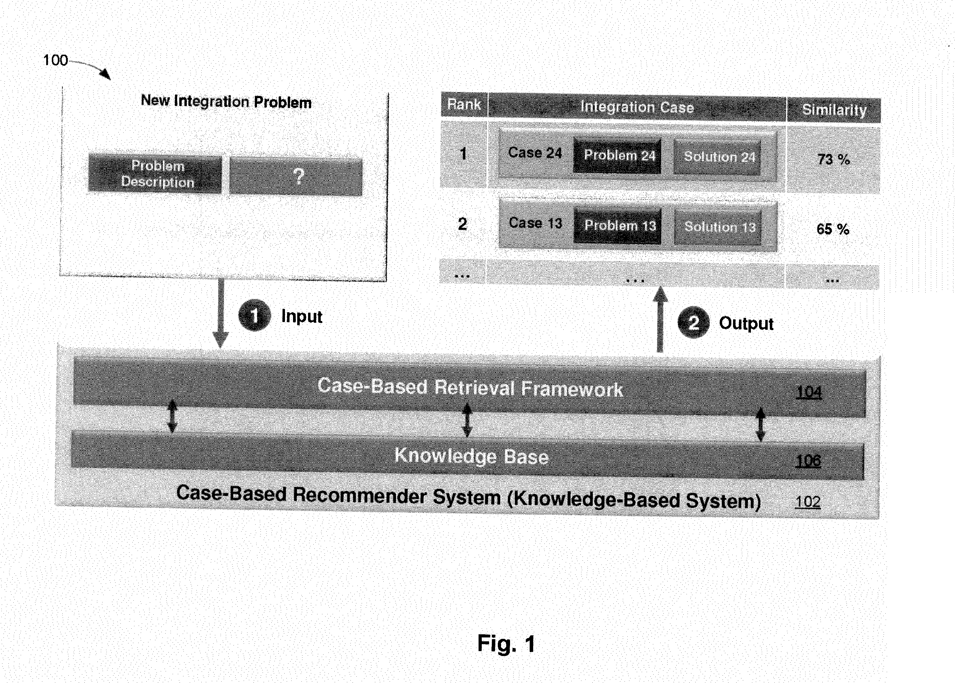

Fig. 1 depicts a system 100 for providing definition and retrieval of integration cases according to one embodiment. A case-based recommender system 102, which includes a case-based retrieval framework 104 and a knowledge base 106. Case-based retrieval framework 104 provides a platform with a knowledge base of already solved integration cases that can be leveraged for adapting a present problem. An integration case is a description of a previous adaptation of the enterprise system that was performed. Case-based retrieval framework 104 retrieves integration cases that are similar to the present problem to allow a service integrator to adapt a problem solution of the already solved integration case as a solution for the present problem. The adaptation of the problem solution allows re-use of previous knowledge to adapt the enterprise system.

In one example, the service integrator inputs a new integration problem that includes a problem description into case-based retrieval framework 104. The integration problem does not include a solution. Case-based retrieval framework 104 searches knowledge base 106 to determine integration cases that have been previously solved. Case-based retrieval framework 104 outputs the integration cases based on the similarity to the new integration problem. The user may then use the integration cases, which include a problem description and problem solution to determine the solution for the new integration problem.

In one embodiment, case-based retrieval framework 104 is used when an extension to a standard enterprise system is being performed. A standard enterprise system may be a standard software system, such as an enterprise resource planning (ERP), customer relationship management (CRM), supply chain management (SCM), or supplier relationship management (SRM) system. The standard enterprise system may be sent to a variety of companies. Each company may want to adapt or extend the standard enterprise system. For example, certain customizations may be performed, such as by adding new user interface (UI) elements to core UI components, adding new process steps to core process models or even extending business objects with additional fields.

In one embodiment, the system integrator may want to integrate a complementary service into the standard enterprise system. The integration problem may be described based on different categories that define the problem, such as the categories of an integration goal, an integration context, and integration requirements. Based on the problem description, case-based retrieval framework 104 searches knowledge base 106 for similar integration cases that have already been solved in the past using a case retrieval algorithm. A list of existing integration cases is generated and output to the system integrator. The list contains integration cases that are ranked according to their computed similarity to the integration problem currently. An integration case may be selected and adapted to the integration problem that is trying to be solved.

Particular embodiments provide a similarity measure in the case retrieval algorithm that leverages a business domain ontology. The business domain ontology describes taxonomy of business functions or hierarchy of business functions in an enterprise using the enterprise system. The similarity measure compares business functions for the problem to be solved to business functions of already solved integration cases.

Case-based Reasoning Cycle

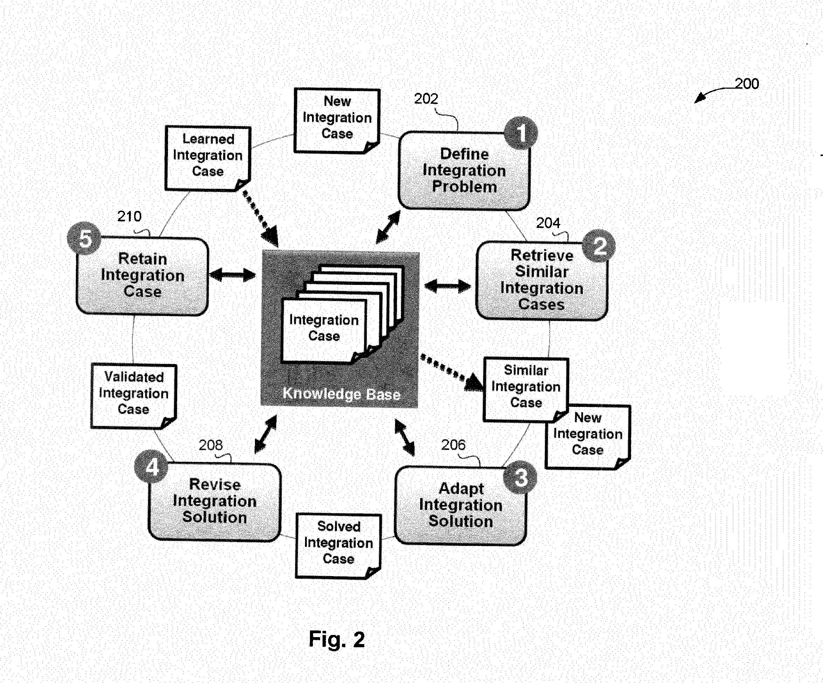

Fig. 2 depicts a case-based reasoning cycle for the semantic re-use of integration knowledge in the context of extensible standard enterprise systems according to one embodiment. Five phases are shown. Details of certain aspects of the phases may be found in U.S. Application No. __/_____, entitled "Case-based Retrieval Framework", filed concurrently (hereinafter "the Framework patent application"), which is incorporated by reference in its entirety for all purposes. At 202, a define integration problem phase is performed. In this phase, an integration problem to be solved is defined. The integration problem may include a problem description, but no problem solution.

At 204, a retrieve similar integration cases phase is performed. This phase retrieves existing integration cases from knowledge base 106 that have integration problem descriptions that are similar to the integration case problem description that was described in the first phase at 202.

At 206, an adapt integration solution phase is performed. In this phase, similar integration cases that have been retrieved and output to a service integrator may be adapted. A selection of one of the suggested integration cases may be received from the service integrator and re-used as a best-fit template that can be adapted with respect to the current integration problem. For example, the problem solution part of the selected integration case may be extracted and adapted to the new integration problem context.

At 208, a revise integration solution phase is performed. In this case, the adapted integration case is stored in knowledge base 106. The integration case may also be validated here.

At 210, a retain integration case phase is performed. This phase stores the validated integration case in knowledge base 106. This allows an incremental, sustained learning of a new integration experience. That is, the new integration case with the problem description and adapted problem solution is stored in knowledge base 106 to allow future service integrators to use this knowledge for their problems.

Similarity Assessment using Business Domain Ontology

Particular embodiments will now describe the retrieve similar integration cases phase at 204. An ontology-based solution to measure similarity between two integration problem descriptions is provided. In one embodiment, the solution measures semantic integration context similarity based on business function descriptions.

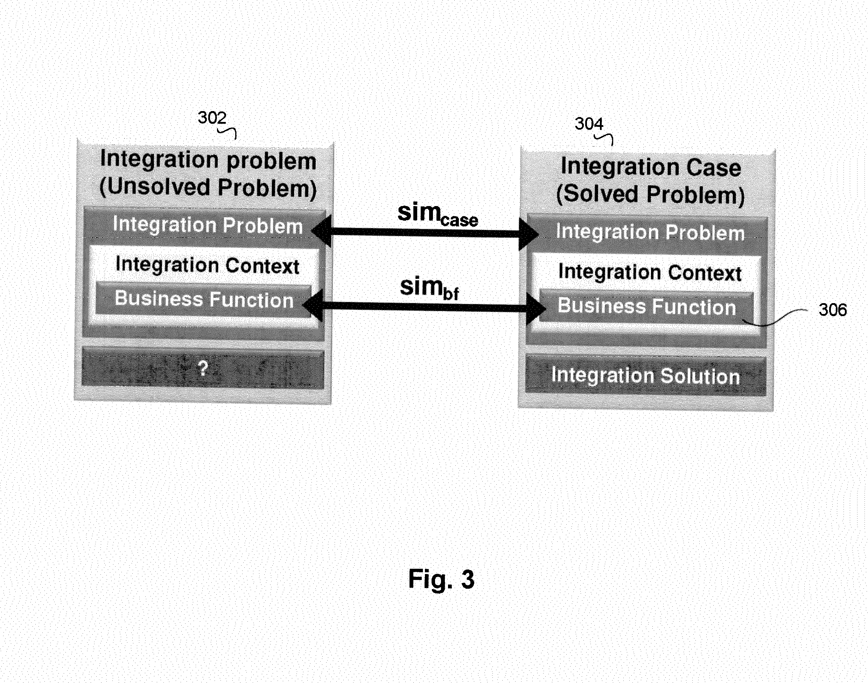

Fig. 3 shows a similarity assessment according to one embodiment. An integration problem 302 may be considered an integration case also. However, the term integration problem is used for discussion purposes and is an integration cases that includes a problem description but not a problem solution. An integration case 304 includes a problem description and a problem solution. Integration problem 302 is a query case in which a problem solution needs to be found. Integration case 304 may be found in knowledge base 106 and is a case with a previous problem that was solved.

Integration problem 302 is defined by a structured or object-oriented case representation format that includes attribute value pairs. Each attribute may be defined by name and associated attribute type. In one embodiment, the attributes of the problem description are divided into three groups: an integration goal description, an integration context description, and an integration requirements description. The integration goal description group includes attributes that define the general goal that should be reached by the integration solution (e.g., UI- or process extension flavors). The integration context description group contains attributes that define the functional area within the enterprise system where the service should be integrated. The integration context includes the core UI-or process component that needs to be extended to integrate the service. The integration requirements description group includes attributes that define in detail the UI- process. - distance logic, -technical, and non-functional integration requirements. Details of different attributes may be found in the Framework patent application.

The similarity $sim_{case}$ may be computed between the problem description of integration problem 302 and the problem description of different integration cases 304 in knowledge base 106. In one embodiment, a local/global principle may be used to compare the similarity. In this case, a similarity measure is divided into local similarity measures for each attribute type. A global similarity measure is calculated by a weighted average of local similarity measures. For an integration case problem description including N attributes, the similarity between the integration problem (query case (qc)) and an existing integration case (ic) is calculated as follows:

$$sim_{case}(qc, ic) = \frac{\sum_{i=1}^{n} w_i * sim_i(qc_i, ic_i)}{\sum_{i=1}^{n} w_i}$$

where $sim_i$ and $w_i$ denote local similarity measures and the weight of attribute i, and $sim_{case}$ represents the global similarity measure of the integration case.

An attribute BusinessFunction is used as a part of the integration context description as shown at 306. This attribute defines a business process or functional area that the integration case is related to and refers to concepts defined in a business domain ontology (BDO). This allows implementing a local similarity function that computes the similarity between two business functions.

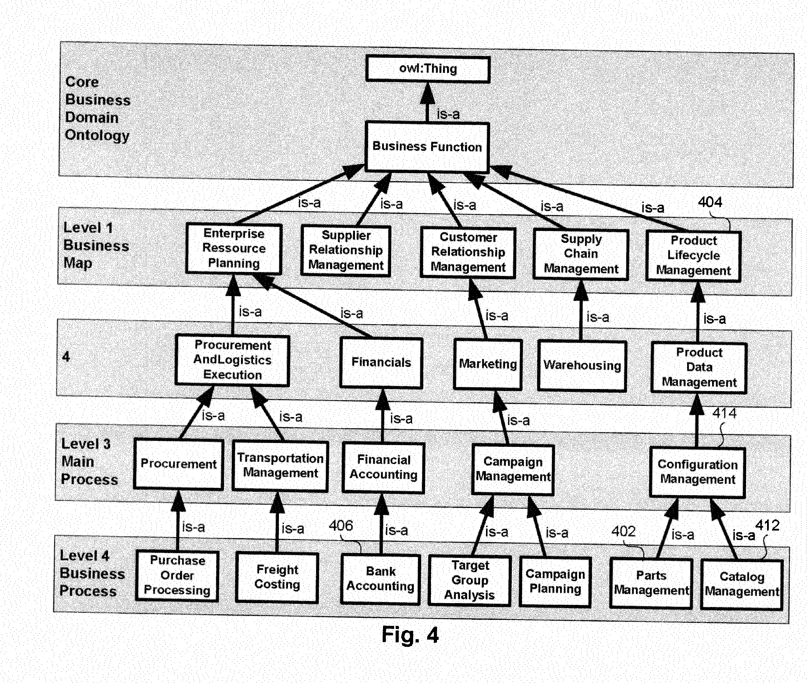

Fig. 4 depicts an example of a business domain ontology according to one embodiment. The BDO categorizes business functions of an enterprise. In one embodiment, the BDO provides a functional view on the business process space of an organization that is using the standard enterprise system. A rich taxonomy of business functions as used by a standard enterprise system is represented by the BDO. Although the BDO shown in Fig. 4 is used, other business domain ontologies may be used and different BDOs may be used for different enterprises.

The BDO shown in Fig. 4 includes categorization of business functions on four abstraction levels: business maps (level 1) defines groups of processes that are supported by a specific type of enterprise system, such as EnterpriseResourcePlanning or CustomerRelationshipManagement. Each business map includes multiple process categories (level 2) that define a group of coarse grained business functions, such as Financials or Marketing. The process categories again refined in the main processes (level 3) that define top-level business processes within an organization, such as Procurement or FinancialAccounting, both of which are further decomposed into business processes (level 4) such as, PurchaseOrderProcessing or PartsManagement.

For one node, such as EnterpriseResourcePlanning, which might include 220 concepts, the concepts of the different levels are connected via connections or stored relationships, such as by a subClassOf axioms. Nodes on the same levels are modeled as disjointed sets.

In one embodiment, the BDO is designed as a taxonomy where nodes of a tree structure represent symbols that are used as attribute values to specify part of the integration context of integration problem 302 and integration case 304. In one embodiment, the taxonomy includes additional knowledge about the relationship between the symbols (concepts) through their position within the hierarchy. Particular embodiments use this ontological representation to determine the similarity between two business functions based on their semantic or taxonomic distance within the ontology.

The problem description may be defined with an integration concept attribute that refers to different node positions in the BDO. For example, the attribute may refer to a leaf as well as to an inner-node of the BDO: an inner node of the BDO clusters more fine-granular business functions that have some properties in common. The deeper descent in the taxonomy means that more business functions may be held in common between nodes. For example, the deeper descent means business functions are more specialized.

Different algorithms may be used to measure the semantic distance between two nodes in the BDO. Although the following algorithms may be described, different algorithms may also be used. The first similarity measure $sim_{bf1}$ defines the similarity between two concepts representing business functions within the BDO as follows:

$$sim_{bf1}(c_{qc}, c_{ic}) = (max(depth(LCS(c_{qc}, c_{ic}))))/(max(depth(c_{qc}), depth(c_{ic})))$$

Here, $C_{qc}$ represents the concept of the query case that defines the business function and $C_{ic}$ represents the concept of the integration case that defines the business function. Furthermore $LCS(c_{qc}, c_{ic})$ is the set of the least common subsumer concepts of the two given concepts and $depth(c_i)$ is the depth of concept $c_i$ in the BDO.

The second similarity measure $sim_{bf2}$ measures the similarity between two concepts representing business functions within the BDO as follows:

$$sim_{bf2}(c_{qc}, c_{ic}) = 1 - \frac{1}{2 * |super(c_{qc}, CN) \cap super(c_{ic}, CN)|}$$

Here, $c_{qc}$ represents the concept of the query case that defines the business function and $c_{ic}$ represents the concept of the integration case that defines the business function. *CN* is the set of all concepts in the BDO and *super(c_i, CN)* defines the subset of concepts in CN that are super concepts of $c_i$. Note that *super(c_i, CN)* does not include the root concept *owl:Thing.*

The measure $sim_{bf1}$ returns a decimal value between 0 *(lowest similarity)* and 1 *(highest similarity)* where the measure $sim_{bf2}$ returns a decimal value between 0,5 *(lowest similarity)* and 1 *(highest similarity).* In Table 1, the similarity measures have been applied to different business functions of the BDO shown in Fig. 4 to show different similarity results.

Table 1. Example integration context similarities between an integration problem and an integration case

| Integration problem (Business Function) | Integration Case (Business Function) | $sim_{bf1}$ | $sim_{bf2}$ |
|---|---|---|---|
| PartsManagement | BankAccounting | 0.200 | 0.500 |
| PartsManagement | CatalogManagement | 0.800 | 0.875 |
| FreightCosting | PurchaseOrderProcessing | 0.600 | 0.833 |
| TransportationManage ment | Procurement | 0.750 | 0.833 |
| FinancialAccounting | TransportationManagement | 0.500 | 0.750 |

Table 1 shows different similarities between different business functions that could be used between the integration problem 302 and integration case 304. A first column shows the business functions for integration problem 302, the second column shows the business functions for integration case 304, the third column shows the similarity rating using the first algorithm, and the fourth column shows the similarity rating using the second measure.

Referring to Fig. 4 and Table I, in the first row of Table I, the PartsManagement business function at 402 in Fig. 4 is compared to a BankAccounting business function at 406 in Fig. 4. The similarity for the first algorithm is computed at 0.200 and the similarity for the second algorithm is computed at 0.500. This represents the semantic distance between the two business functions in the BDO. The first measure sim_bf1 is computed as follows: the set of the least common subsumer concepts includes the nodes BusinessFunction and owl:Thing that leads to a maximum concept depth of 1. The maximum depth of both concepts within the ontology is 5 resulting in an overall similarity of 0.2. The first measure has a maximum depth of 5 in the ontology and the overall similarity of 0.2 is computed due to PartsManagement business function at 402 being located at level 5 of one branch and BankAccounting business function at 406 being located at level 5 of another branch. The similarity rating represents the distance between the two business functions in the depth of the BDO. The first measure works with business functions (ontology concepts) as leaf nodes.

The second measure sim_bf2 may be computed as follows: the intersection size between the super concepts of both concepts is 1 due the common super concept BusinessFunction . This leads to an overall similarity value of 0.5. Note that super(c_i,CN) does not include the root concept owl:Thing within the second measuresim_bf2.

In another example, the business function of PartsManagement at 402 is selected as the business function in integration problem 302 and the business function of CatalogManagement at 412 is selected as the business function in integration case 304. The similarity tabulated is 0.800 for the first measure and 0.875 for the second measure. The similarity for these two business functions is higher than the similarity than the similarity for the PartsMangement and BankAccounting business functions in the first row of Table I. This is because the business function PartsManagment at 402 is a child node of the business function ConfigurationManagement at 414 and the business function CatalogManagement at 412 is also a child of the business function ConfigurationManagement. Thus, the similarity may be higher because these two business functions are more related in the business domain ontology (They are children of the same node and also fall within the same branch). For the first similarity function, the depth is one level distance away between the two business functions, which yields a similarity of 0.8. For the second similarity function, the two business functions are leaf nodes of the same parent node, which yields a similarity of 0.875. For example, the first measure sim_bf1 may be computed as follows: the set of the least common subsumer concepts includes the nodes ConfigurationManagement, ProductData Management, ProductLifecycleManagement, BusinessFunction and owl:Thing that leads to a maximum concept depth of the least common subsumer of 4. The least common subsumer node in this example is ConfigurationManagement that has the depth 4. The maximum depth of both concepts within the ontology is 5 resulting in an overall similarity of 0.8. For the second measure sim_bf2 for this pair of concepts is computed as follows: the intersection size between the super concepts of both concepts is 4 due the common super concept BusinessFunction, ProductLifecycleManagement, ProductDataManagement, ConfigurationManagement . This leads to an overall similarity value of 0.875. Note that super(c_i,CN) does not include the root concept owl:Thing within the second measure sim_bf2

The business function similarity may be used in the global calculation, which uses a weighted average of local similarity measures for different attributes for the problem description for integration problem 302 and integration case 304. In other embodiments, the business function similarity may be used to select between integration cases 304 without considering global similarity. For example, integration cases 304 that have the most similar business function may be selected.

The integration case found in the second row having a business function CatalogManagement has the highest similarity. This integration case may be selected as being for re-use because the business function CatalogManagement has the highest integration context similarity to the business function PartsManagement. For example, a solution to an extension in the CatalogManagement area may be similar for an extension in the PartsManagement area because the two groups may be related in the business functions being performed.

Example

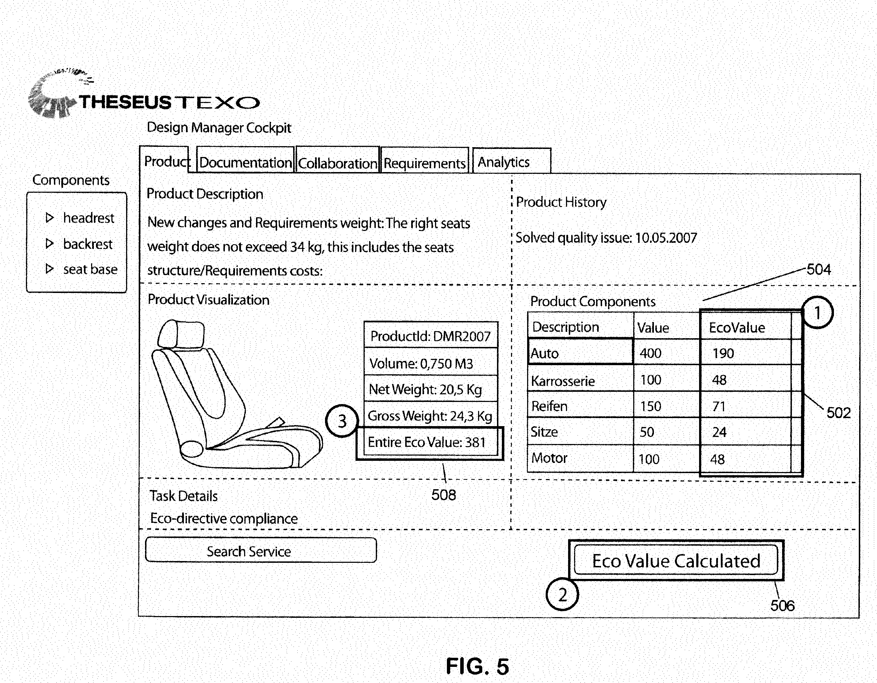

In one example, a service integrator has to integrate an eco calculation service into the standard enterprise system. For example, Fig. 5 shows an example of an interface 500 of a business application according to one embodiment. As a result of legal changes in export guidelines, a manufacturer of car seats has to certify its products to guarantee that materials used within the car seat comply with environmental laws. The core version of business application does not support the calculation of eco values for a given car seat. Thus, the business application needs to be extended to support this calculation.

The missing functionality has been created and published as a service on the service marketplace by a service provider. The service allows the calculation of eco values for products including certification. A product designer as a user of a product lifecycle management (PLM) application in the company wants to extend business application with this missing kind of functionality. The product designer takes the role of a service consumer and accesses the service marketplace directly from within the business application. The product designer searches for services that provide the missing functionality and receives a list of matching services from various service providers certified for the enterprise system. According to a working context, the designer selects a service called *"Eco-Calculator"* and purchases it on the marketplace.

Subsequently the service is automatically integrated into the core business application without running a manual integration project. The following extensions are performed to the core business application to extend interface 500 with (1) an additional table column 502 ("Eco Value") in a product components table 504, (2) an additional button 506 ("Calculate Eco Value") and (3) an additional field 508 indicating the total eco value for the car seat ("Entire Eco Value").

After the service is integrated into the business application, the service can be used by the product designer to calculate eco values for a given bill of material. If the total eco value fulfils the legal requirements, a certificate is generated and passed to the consumer application.

This scenario shows an example for extending a core UI component with additional UI elements. Based on the same principles a core process model can be extended, e.g., by inserting additional process steps.

Instead of developing the solution from scratch, case-based reasoning framework 104 is used to search for similar integration cases already solved in the past. To describe the integration problem, the BDO taxonomy is used to select the integration context within the core enterprise system where the service should be integrated. For example, the business process PartsManagement has the core component that should be extended with the complementary service. This business process is part of the business function of ProductLifecycleManagement shown at 404. Other integration requirements may also be received from the service integrator.

Case-based reasoning framework 104 then determines integration cases that are similar to integration problem 302. For example, integration problem 302 is compared with integration cases 304 in knowledge base 106 by computing the global similarity measure described above. As part of the global similarity measure, a local similarity measure for the comparison of the integration context is determined by comparing the business functions of integration problem 302 and integration case 304 using the similarity algorithms described above.

In one embodiment, a first integration case 304 has an attribute of the business function BankAccounting. A second integration case 304 has an attribute of the business function CatalogManagement. The business function CatalogManagement has a higher similarity rating as described above because it is a child of the business function ConfigurationManagement. In this case, second integration case 304 may be considered more similar to integration problem 302.

Interface

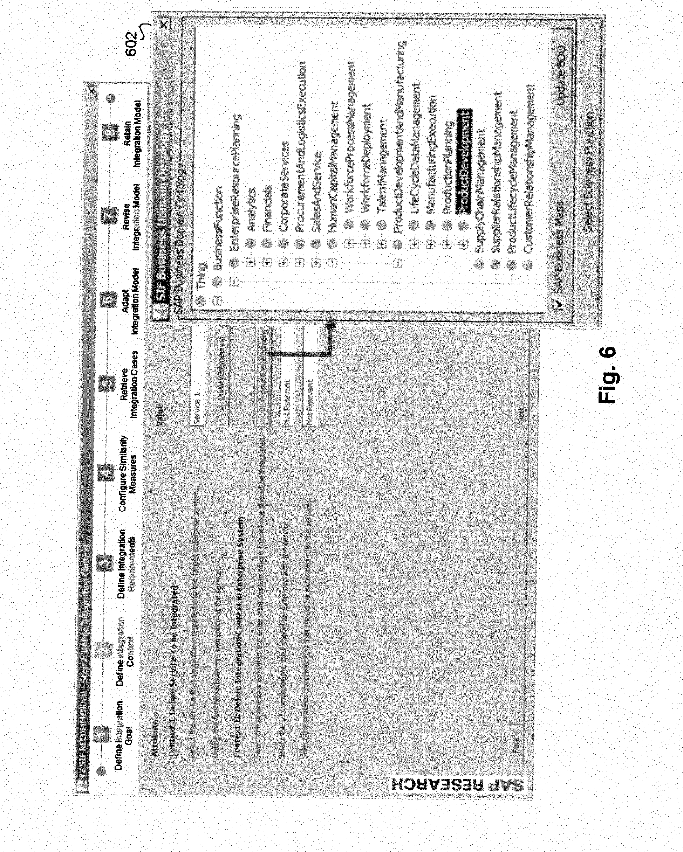

Fig. 6 shows an example of an interface in which a business function may be selected according to one embodiment. A business domain ontology browser 602 is used to display the BDO. A user may select a business area in which the service should be integrated. Interface 602 displays the representation of the BDO and a selection of the business function may be received from the service integrator.

Method Flow

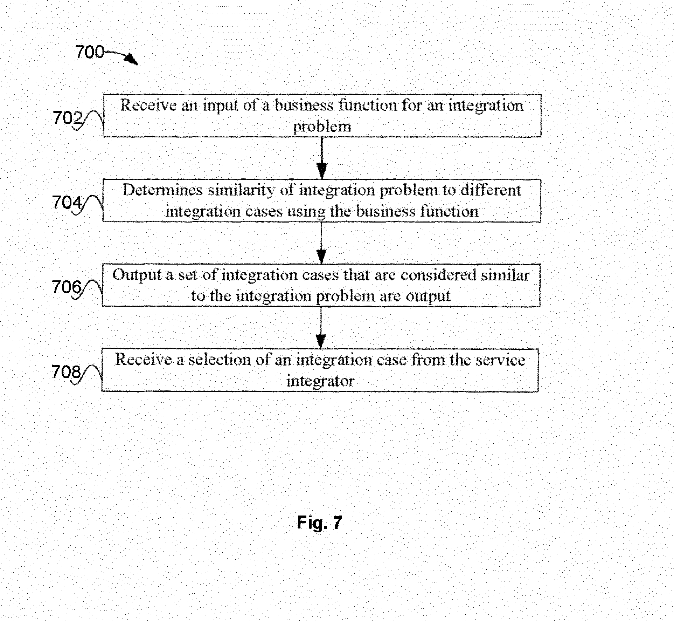

Fig. 7 depicts a simplified flowchart 700 of a method for retrieving integration cases 304 according to one embodiment. At 702, an input of a business function for an integration problem is received. The input may be for a business function in a BDO that may be output to a user. Also, other requirements for integration problem 302 may be received.

At 704, case-based retrieval framework 104 determines similarity of integration problem 302 to different integration cases 304 using the business function. For example, the business function input at 702 may be compared to the business function in different integration cases 304. A local similarity measure may be calculated based on the similarity of the two business functions using the BDO.

At 706, a set of integration cases 304 that are considered similar to integration problem 302 are output. For example, the local similarity measure with the business function may be used to determine a global similarity measure for all attributes of integration cases 304. Then, the most similar integration cases 304 may be output. Also, the integration cases determined may be based solely on the local similarity measure of the business function.

At 708, a selection of an integration case 304 is received from the service integrator. This is the integration case that will be used as a template for developing a problem solution for integration problem 302. The service integrator may then adapt the problem solution for the selected integration case 304 to determine the problem solution for integration problem 302.

Conclusion

Accordingly, particular embodiments apply ontology-based similarity measures to determine the taxonomic distance between two business functions in a BDO that formally represents reference process models in the context of standard enterprise systems. The similarity measurement for the business functions may be embedded in case-based reasoning framework 104.

The similarity measure for the business function helps a service integrator find integration cases that were developed in similar function areas of the enterprise system. Accordingly, particular embodiments combine application of a business domain ontology, case-based reasoning retrieval, and taxonomic distance measures based on the BDO.

System Overview

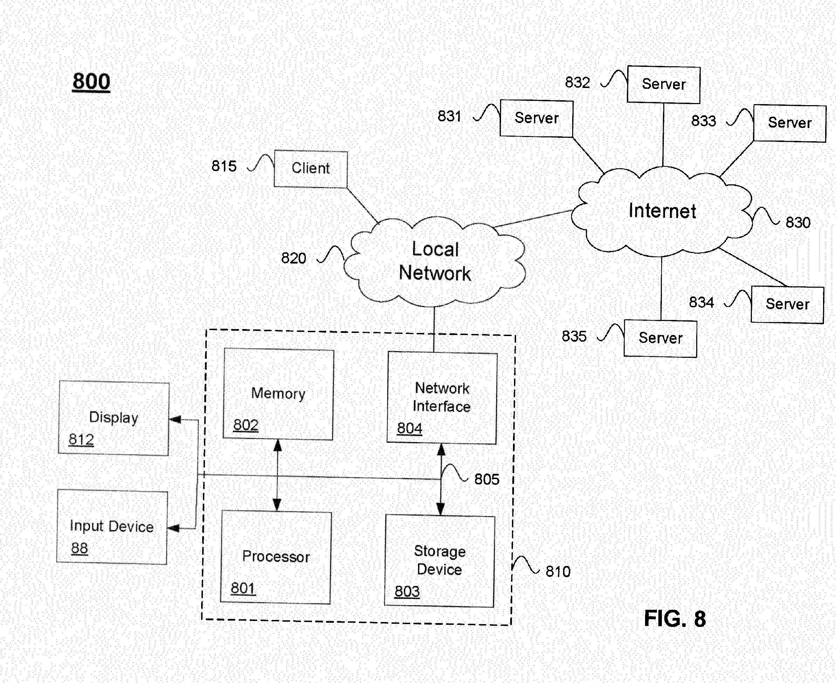

Fig. 8 illustrates hardware of a special purpose computing machine configured with a similarity measure using a BDO according to one embodiment. An example computer system 810 is illustrated in Fig. 8. Computer system 810 includes a bus 805 or other communication mechanism for communicating information, and a processor 801 coupled with bus 805 for processing information. Computer system 810 also includes a memory 802 coupled to bus 805 for storing information and instructions to be executed by processor 801, including information and instructions for performing the techniques described above, for example. This memory may also be used for storing variables or other intermediate information during execution of instructions to be executed by processor 801. Possible implementations of this memory may be, but are not limited to, random access memory (RAM), read only memory (ROM), or both. A storage device 803 is also provided for storing information and instructions. Common forms of storage devices include, for example, a hard drive, a magnetic disk, an optical disk, a CD-ROM, a DVD, a flash memory, a USB memory card, or any other medium from which a computer can read. Storage device 803 may include source code, binary code, or software files for performing the techniques above, for example. Storage device and memory are both examples of computer readable storage mediums.

Computer system 810 may be coupled via bus 805 to a display 812, such as a cathode ray tube (CRT) or liquid crystal display (LCD), for displaying information to a computer user. An input device 811 such as a keyboard and/or mouse is coupled to bus 805 for communicating information and command selections from the user to processor 801. The combination of these components allows the user to communicate with the system. In some systems, bus 805 may be divided into multiple specialized buses.

Computer system 810 also includes a network interface 804 coupled with bus 805. Network interface 804 may provide two-way data communication between computer system 810 and the local network 820. The network interface 804 may be a digital subscriber line (DSL) or a modem to provide data communication connection over a telephone line, for example. Another example of the network interface is a local area network (LAN) card to provide a data communication connection to a compatible LAN. Wireless links are another example. In any such implementation, network interface 804 sends and receives electrical, electromagnetic, or optical signals that carry digital data streams representing various types of information.

Computer system 810 can send and receive information through the network interface 804 across a local network 820, an Intranet, or the Internet 830. In the Internet example, software components or services may reside on multiple different computer systems 810 or servers 831-835 across the network. The processes described above may be implemented on one or more servers, for example. A server 831 may transmit actions or messages from one component, through Internet 830, local network 820, and network interface 804 to a component on computer system 810. The software components and processes described above may be implemented on any computer system and send and/or receive information across a network, for example.

Particular embodiments may be implemented in a non-transitory computer-readable storage medium for use by or in connection with the instruction execution system, apparatus, system, or machine. The computer-readable storage medium contains instructions for controlling a computer system to perform a method described by particular embodiments. The instructions, when executed by one or more computer processors, may be operable to perform that which is described in particular embodiments.

As used in the description herein and throughout the claims that follow, "a", "an", and "the" includes plural references unless the context clearly dictates otherwise. Also, as used in the description herein and throughout the claims that follow, the meaning of "in" includes "in" and "on" unless the context clearly dictates otherwise.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents may be employed without departing from the scope of the invention as defined by the claims.

**Claims**

1. A method comprising:

   storing a set of integration cases previously used for adapting a standard enterprise system, wherein the set of integration cases include a business function attribute selected from a business domain ontology (BDO) of an enterprise;
   receiving an integration problem for extending the standard enterprise system, the integration problem including a business function attribute selected from the BDO of the enterprise;
   determining, by a computing device, a similarity between the business function attribute of each of the set of integration cases to the business function attribute of the integration problem, the similarity determined based on a first position in the BDO of each business function attribute of the set of integration cases in relation to a second position in the BDO of the business function attribute of the integration problem;
   determining one or more similar integration cases in the set of integration cases to the integration problem based on the determined similarity; and
   outputting the one or more similar integrations cases.

2. The method of claim 1, wherein the BDO provides a categorization of business functions in the enterprise.

3. The method of claim 1 or 2, wherein the BDO is organized in a hierarchical structure.

4. The method of claim 3, wherein the similarity is determined based on a distance between the first position in the BDO of each business function attribute of the set of integration cases in relation to the second position in the BDO of the business function attribute of the integration problem.

5. The method of claim 4, wherein a depth of the first position in relation to a depth of the second position in the hierarchy is used to calculate the similarity.

6. The method of claim 3, wherein an intersection size between super concepts of the business function attribute of the integration case in relation to the business function attribute of the integration problem is used to calculate the similarity.

7. The method of any one of the preceding claims, wherein computing similarity comprises:

   computing a local similarity measure for the business function attribute of each of the set of integration cases to the business function attribute of the integration problem;
   computing a local similarity measure for another attribute of each of the set of integration cases to another attribute of the integration problem; and
   computing a global similarity for each of the set of integration cases based on each integration cases computed local similarity measures and/or wherein a problem solution for one of the one or more integration cases is usable to determine a problem solution for the integration problem.

8. The method of any one of the preceding claims, wherein different enterprises are associated with different BDOs and/or wherein an integration context description describing a context of the integration of the integration problem includes the business function attribute.

9. The method of any one of the preceding claims, wherein:

the set of integration cases includes a problem description and a problem solution for the adapting of the standard enterprise system,
the integration problem includes a problem description and not a problem solution, and
the problem solution for a similar integration case is usable to determine the problem solution for the integration problem.

10. A non-transitory computer-readable storage medium containing instructions for controlling a computer system to be operable to:

store a set of integration cases previously used for adapting a standard enterprise system, wherein the set of integration cases includes a business function attribute selected from a business domain ontology (BDO) of an enterprise;
receive an integration problem for extending the standard enterprise system, the integration problem including a business function attribute selected from the BDO of the enterprise;
determine a similarity between the business function attribute of each of the set of integration cases to the business function attribute of the integration problem, the similarity determined based on a first position in the BDO of each business function attribute of the set of integration cases in relation to a second position in the BDO of the business function attribute of the integration problem;
determine one or more similar integration cases in the set of integration cases to the integration problem based on the determined similarity; and
output the one or more similar integrations cases.

11. The computer-readable storage medium of claim 10, wherein the BDO provides a categorization of business functions in the enterprise.

12. The computer-readable storage medium of claim 10 or 11, wherein the BDO is organized in a hierarchical structure.

13. The computer-readable storage medium of claim 12, wherein the similarity is determined based on a distance between the first position in the BDO of each business function attribute of the set of integration cases in relation to the second position in the BDO of the business function attribute of the integration problem.

14. The computer-readable storage medium of claim 13, wherein a depth of the first position in relation to a depth of the second position in the hierarchy is used to calculate the similarity and/or wherein an intersection size between super concepts of the business function attribute of the integration case in relation to the business function attribute of the integration problem is used to calculate the similarity.

15. The computer-readable storage medium of any of claims 10 to 14,
wherein computing similarity comprises:

computing a local similarity measure for the business function attribute of each of the set of integration cases to the business function attribute of the integration problem;
computing a local similarity measure for another attribute of each of the set of integration cases to another attribute of the integration problem; and
computing a global similarity for each of the set of integration cases based on each integration cases computed local similarity measures and/or wherein a problem solution for one of the one or more integration cases is usable to determine a problem solution for the integration problem.

16. An apparatus comprising:

one or more computer processors; and
a computer-readable storage medium comprising instructions for controlling the one or more computer processors to be operable to:

store a set of integration cases previously used for adapting a standard enterprise system, wherein the set of integration cases includes a business function attribute selected from a business domain ontology (BDO) of an enterprise;

receive an integration problem for extending the standard enterprise system, the integration problem including a business function attribute selected from the BDO of the enterprise;

determine a similarity between the business function attribute of each of the set of integration cases to the business function attribute of the integration problem, the similarity determined based on a first position in the BDO of each business function attribute of the set of integration cases in relation to a second position in the BDO of the business function attribute of the integration problem;

determine one or more similar integration cases in the set of integration cases to the integration problem based on the determined similarity; and

output the one or more similar integrations cases.

**Fig. 1**

**Fig. 2**

**Fig. 3**

Fig. 4

THESEUS TEXO

Design Manager Cockpit

| Product | Documentation | Collaboration | Requirements | Analytics |

**Components**

▷ headrest
▷ backrest
▷ seat base

**Product Description**

New changes and Requirements weight: The right seats weight does not exceed 34 kg, this includes the seats structure/Requirements costs:

**Product History**

Solved quality issue: 10.05.2007

**Product Visualization**

ProductId: DMR2007

Volume: 0,750 M3

Net Weight: 20,5 Kg

Gross Weight: 24,3 Kg

Entire Eco Value: 381

③

**Product Components**

| Description | Value | EcoValue |
|-------------|-------|----------|
| Auto | 400 | 190 |
| Karrosserie | 100 | 48 |
| Reifen | 150 | 71 |
| Sitze | 50 | 24 |
| Motor | 100 | 48 |

①

504

502

**Task Details**

508

**Eco-directive compliance**

Search Service

Eco Value Calculated

②

506

**FIG. 5**

16

Fig. 6

700

702 — Receive an input of a business function for an integration problem

704 — Determines similarity of integration problem to different integration cases using the business function

706 — Output a set of integration cases that are considered similar to the integration problem are output

708 — Receive a selection of an integration case from the service integrator

**Fig. 7**

FIG. 8

Europäisches
Patentamt

European
Patent Office

Office européen
des brevets

**EUROPEAN SEARCH REPORT**

Application Number

EP 12 00 4496

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is notorious. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff)<br><br>----- | | INV.<br>G06Q10/10 |
| | | | TECHNICAL FIELDS SEARCHED (IPC)<br><br>G06Q |

The present search report has been drawn up for all claims

| Place of search | Date of completion of the search | Examiner |
|---|---|---|
| Munich | 11 October 2012 | Gabriel, Christiaan |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)